# EUROPEAN PATENT APPLICATION

(11) **EP 3 103 924 A1**
(43) Date of publication of application: **14.12.2016**
(21) Application number: 15171269.2
(22) Date of filing: 09.06.2015
(51) Int. Cl.: E02B 17/02, F03D 13/20

(54) **MONOPILE FOUNDATION FOR AN OFFSHORE TOWER STRUCTURE**

(71) Applicant: RWE Innogy GmbH, 45127 Essen (DE)
(72) Inventor: THOMAS, Christopher Mark, Caerphilly, South Wales Cf831AH (GB)
(74) Representative: Kierdorf Ritschel Richly

(57) **Abstract**

The invention refers to a monopile foundation for an offshore tower structure comprising a monopile (3) for receiving the tower structure and a subsea base (1), wherein the monopile (3) is partially embedded in the sea ground (7), wherein the subsea base (1) engages the monopile (3) peripherally and wherein the subsea base (1) comprises a collar (2) surrounding the monopile and being at least partially also embedded in the sea ground (7). The invention also refers to a subsea base (1) for use in such foundation as well as a method for establishing a monopile foundation.

## Description

The invention refers to a monopile foundation for an offshore tower structure as well as to a subsea base for establishing a monopile foundation. The invention moreover refers to a method for establishing a monopile foundation of an offshore tower structure.

Generally, monopile foundations are a kind of deep foundation which uses a single, generally large-diameter, foundation structural element to support all the loads of a large above-surface structure. Such monopile foundations have been utilized in recent years for economically constructing fixed-bottom offshore windfarms in shallow-water subsea locations. A typical construction process for wind turbine subsea monopile foundation in sand includes driving a large hollow steel pile of a diameter of about 4 meters about 25 meters deep into the sea bed. A pile normally receives a transition piece and the transition piece receives the tower structure of a wind turbine installation. The tower normally carries a nacelle and a rotor mounted thereto.

Normally, monopiles are vibrated or impact driven into position. Sometimes also combinations of impact driving and vibrating are applied depending on the geological conditions of the sea bed.

One drawback with impact driving of piles is that such impact driving causes remarkable noise pollution which is particularly harmful to any sea mammals. Insofar, vibrating of the piles has certain advantages over impact driving, however, sometimes impact driving may not be avoided due to the presence of very hard material such as rocks in the sea ground. Thus, it would generally be more advantageous if the embedded length of the monopile into the sea ground could be reduced, however, this would ultimately lead to a reduced foundation stiffness and to a worse control over the natural frequency induced by the action of the waves. Accordingly, it is not simply possible to reduce the embedded length of the monopile because this could possibly cause pile failure. There have been made attempts to provide alternative bases for anchoring offshore structures in order to achieve an improved stability against imposed environmental loads like winds, waves, currents and ice. For example, WO 03/095748 A discloses an offshore base having two or more legs radiating from a central support structure, wherein the legs are wholly or substantially formed from plate steel.

Another system and method for installing a wind turbine at an offshore location is for example disclosed in US 2007/001464 A. This publication discloses a wind turbine system including a wind turbine generator having a rotor and a nacelle mounted on top of the wind tower. The wind tower is mounted on a central caisson. The wind turbine system further includes a plurality of tensioned mooring lines flexibly secured to the central caisson. The mooring lines are secured to a plurality of anchors fixed to the sea bed. The anchors are adapted to support the lateral loads on the wind turbine system.

It is thus an object of the current invention to provide a monopile foundation for an offshore tower structure comprising a monopile for receiving the tower structure which has an increased foundation stiffness and a better control over imposed environmental loads and which does not essentially depart from the concept of a pile foundation. Moreover, it is an object of the invention to provide a monopile foundation with a reduced embedded length of the monopile as well as to provide such foundation and a method of establishing the foundation which can be vibro-driven into the sea bed, thus avoiding any noise pollution due to impact driving.

These and other objects are solved by the subject matter of independent claims 1, 8 and 10. Advantageous embodiments may be derived from the dependent claims.

According to one aspect of the current invention there is provided a monopile foundation for an offshore tower structure comprising a monopile for receiving the tower structure and a subsea base, wherein the monopile is partially embedded in the sea ground, wherein the subsea base engages the monopile peripherally and wherein the subsea base comprises a collar surrounding the mono pile and being at least partially also embedded in the sea ground. Advantageously, the subsea base forms a kind of pedestal which forms a localized increased diameter in a critical support area of the monopole which generates increased effective stiffness by increasing the area of supporting soil nearer the seabed, reduces the maximum bending moments acting on the monopole and increases the amount of soil dampening. Improves stiffness and dampening will have a beneficial effect on the fatigue life of structure. The subsea base provides an increased diameter support structure for the monopile which could be driven through the subsea base.

Advantageously, the collar is in the form of an outer cylindrical skirt defining an enlarged diameter support structure of the monopile. The design of the foundation according to the invention has the benefit that the foundation stiffness is increased and a better control over a natural frequency is achieved. The maximum moments introduced into the monopile itself are reduced and thus there is a potentially reduced soil degradation in the periphery of the embedded length of the monopile. Ultimately, the embedded pile length may be reduced so that all in all monopiles with a reduced length and thus with a reduced weight can be utilized.

Additionally and/or alternatively, monopiles with a reduced diameter and with a reduced wall thickness might be utilized. The reduced embedded length of the monopile would help to avoid any hard rock formation below the sea bed surface and would reduce the risk of pile refusal and the need of drilling or the need for impact driving the monopile which arguably would reduce noise pollution.

Finally, due to the increased foundation stiffness larger turbines could be supported on the tower structure.

According to one advantageous embodiment of the monopile foundation according the current invention the collar comprises a central hub defining an inner pile sleeve, the inner pile sleeve casing the monopile.

The term "inner" in the above context does not necessarily mean that the hub or pile sleeve is enclosed by the collar but simply expresses that in projection of the pile sleeve is within the periphery of the collar. Preferably the pile sleeve and the collar are arranged coaxially and concentrically relative to each other. Advantageously, an inner annular space between the inner pile sleeve of the subsea base and the monopile is grouted.

For that purpose the inner pile sleeve could be provided with elastomeric grout seals. The use of grout seals in pile sleeves is generally known to a person skilled in the art. Also known to a person skilled in the art are appropriate sorts of grout to be used for grouting the monopile driven through the inner pile sleeve of the subsea base.

Preferably, the outer annular space between the collar and the monopile encloses the soil of the sea ground so that indeed the collar, i.e. the skirt of the subsea base, constitutes a localized increased diameter of the monopile foundation structure.

In one preferred embodiment of the monopile foundation according to the current invention the collar and the central hub are connected by at least three radially extending spacers. The spacers can be in the form of spokes or separator blades.

The pile sleeve can extend above the collar, i.e. can be in an elevated position relative to the collar. The collar advantageously encloses a hollow which in the installed position is being filled by the soil of the sea bed.

According to the current invention there is also provided a subsea base for establishing a monopile foundation as described above, the subsea base comprising an outer collar and an inner pile sleeve, the pile sleeve being arranged coaxially and in projection preferably concentrically relative to each other, the collar defining a hollow tube-like profile with an enlarged diameter. Again this does not mean that the collar encloses the pile sleeve although this is also within the scope of the present invention. The pile sleeve may be connected to the collar by at least three spacers, spokes or junction plates.

According to the current invention there is also provided a method of establishing a monopile foundation of an offshore tower structure comprising the following steps:
- providing a subsea base comprising a collar and an inner pile sleeve, the collar having a larger diameter than the pile sleeve,
- driving the subsea base into the sea ground so that the collar is at least partially embedded into the sea ground,
- driving the monopile through the pile sleeve into the sea ground and
- grouting an annular space between the pile sleeve and the monopile.

Preferably, the subsea base and also preferably the monopile is vibrated into the sea ground.

Generally, according to the invention the subsea base may comprise one or more water jetting nozzles as well as one or more soil outlet valves. Due to this configuration of the subsea base it is generally possible to easily remove the subsea base and the monopile on decommissioning of the foundation. A removal of the collar might also be necessary after a pile refusal in the event it should have not been possible to drive the monopile to the target depth, due to unexpected ground conditions. In that event it is necessary to remove the subsea base and to place it elsewhere. In order to loosen and remove the collar from the surrounding soil water might be circulated through nozzles attached to the collar. During the removal of the collar the collar is preferably vibrated which results in a liquefaction of the surrounding soil. Soil outlet valves at the collar may be left in an open position to reduce any suction effect when the monopile and/or the subsea base is lifted out.

The invention will be explained hereinafter by way of example while referring to the accompanying drawings in which:
- Figure 1: shows a perspective view of the subsea base of the monopile foundation according to the current invention,
- Figure 2: shows the subsea base which is already vibrated into the sea ground during driving the monopile through the pile sleeve of the sea bed,
- Figure 3: shows a state of the foundation where the monopile already has been driven through the pile sleeve of the subsea base,
- Figure 4: shows the state of the monopile foundation during removal of the monopile on decommissioning and
- Figure 5: shows schematically a soil replacement of the sea ground after removal of the subsea base and the monopile.

All drawings are intended to be merely schematically. Same parts are denoted by the same reference numerals throughout all of the figures.

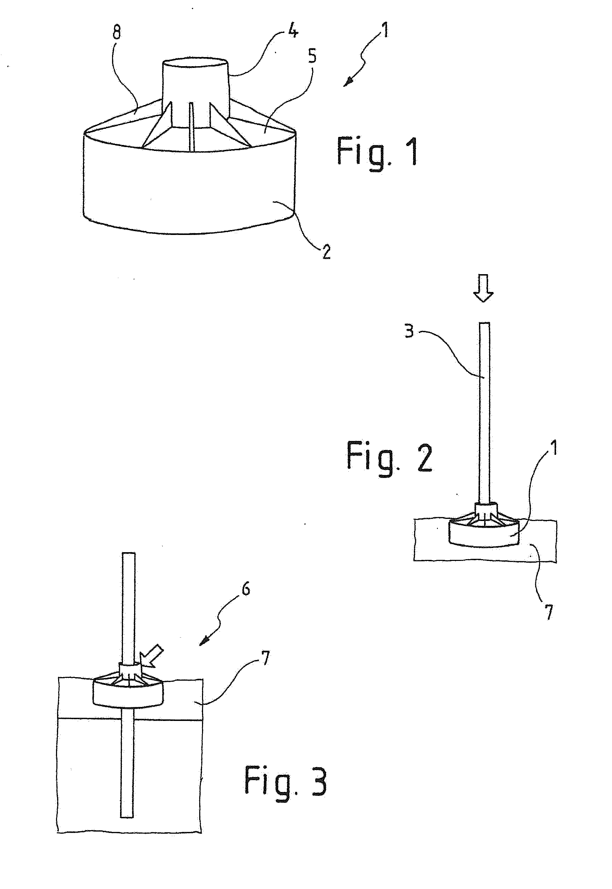

Figure 1 shows a perspective view of a subsea base 1 for use in a monopile foundation for an offshore tower structure according to the current invention. The subsea base 1 forms a kind of pedestal and comprises a collar 2 or likewise outer skirt which is a hollow cylindrical steel profile. The terms "collar" on the one hand and "skirt" on the other hand are hereinafter used synonymously.

The collar 2 of the subsea base 1 is basically hollow and open towards its leading end. The leading end of the collar 2 is the end facing the sea ground 7 whereas the trailing end of the collar 2 may likewise be open or closed.

The collar 2 may have a diameter which is two to three times larger than the diameter of the monopile 3 (see figures 2 to 5).

The subsea base 1 comprises a pile sleeve 4 which is in the specific embodiment attached to a closed top 5 of the collar 2.

The pile sleeve 4 is peripherally supported on the top 5 by several junction plates 8 which extend radially from the periphery of the pile sleeve 4 to the periphery of the collar 2.

The collar 2 must not necessarily have a closed top 5, the collar 2 could just be a cylindrical profile and the pile sleeve 4 could be connected to the cylindrical profile of the collar 2 by spacers or spokes radially extending from the pile sleeve 4 to the collar 2.

In the event the collar 2 has a closed top 5 as shown in figure 1 it is most advantageous if the top 5 had soil outlet valves which are not shown in the drawings.

The method of establishing the monopile foundation 6 according to the current invention in a first step includes vibrating the subsea base 1 into the sea ground 7. The collar may for instance have a diameter of 10 to 12 meters whereas the pile sleeve 4 may have a diameter of about 4 to 5 meters.

In a next step the monopile 3 which is a hollow tube-like profile is driven through the pile sleeve 4 into the sea ground 7, preferably the monopile 3 is vibrated into the sea ground 7.

After the monopile 3 is fed through the pile sleeve 4 and driven into the sea ground 7 to its target depth an annular space between the pile sleeve 4 and the monopile 3 is grouted. The installation for placing the grout into the annular space is not shown in the drawings.

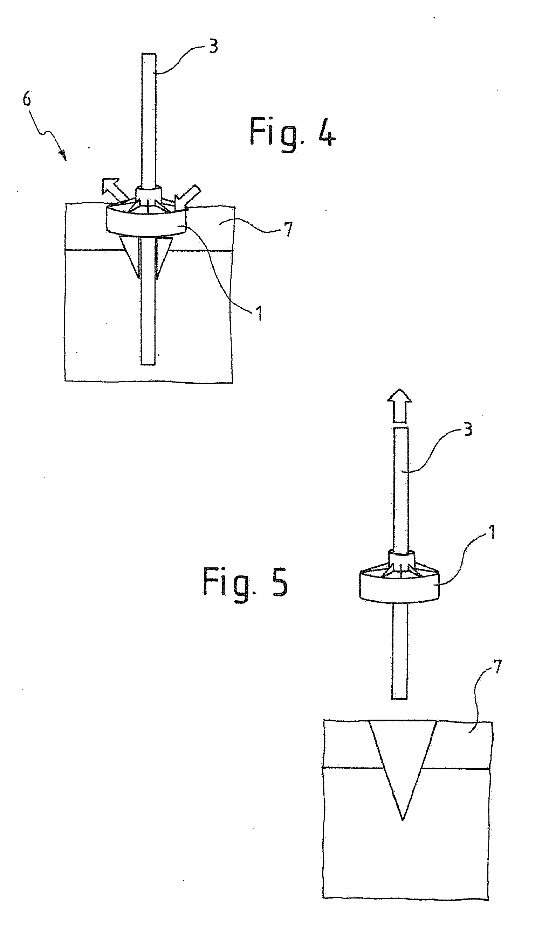

Figure 4 shows the foundation 6 in place. If the subsea base 1 would have a design with a closed top 5 there would be additionally a soil outlet valve for decommissioning. Decommissioning would be done by water jetting, i.e. a water jet would be introduced into the enclosure of the collar 2 so that the soil enclosed by the collar 2 could be removed through the soil outlet valve. This can be done while vibrating so that the soil is again being liquefied. Then the monopile 3 would be also again vibrated and lifted out. After removal of the subsea base 1 and the monopile 3 (see figure 5), the soil of the sea ground 7 could be returned.

The monopile foundation for an offshore tower structure according to the invention has been described above. On this monopile foundation, i.e. on the monopile 3, normally a transition piece is being mounted. The transition piece will be flanged to the leading end of the monopile 3. The transition piece may receive the lowermost profile of a tower structure which may for example support a wind turbine.

### Reference numerals

- 1: Subsea base
- 2: Collar
- 3: Monopile
- 4: Pile sleeve
- 5: Top
- 6: Foundation
- 7: Sea ground
- 8: Junction plates

## Claims

1. Monopile foundation for an offshore tower structure comprising a monopile (3) for receiving the tower structure and a subsea base (1),wherein the monopile (3) is partially embedded in the sea ground (7), wherein the subsea base (1) engages the monopile (3) peripherally and wherein the subsea base (1) comprises a collar (2) surrounding the monopile (3) and being at least partially also embedded in the sea ground (7).

2. Monopile foundation of claim 1, **characterized in that** the collar (2) is in the form of an outer cylindrical skirt defining an enlarged diameter support structure for the monopile (3).

3. Monopile foundation according to any one of the preceding claims, **characterized in that** the collar (2) comprises a central hub defining an inner pile sleeve (4), the inner pile sleeve (4) casing the monopile (3).

4. Monopile foundation according to claim 3, **characterized in that** an annular space between the inner pile sleeve (4) of the subsea base (1) and the monopile (3) is grouted.

5. Monopile foundation according to any one of the preceding claims, **characterized in that** an outer annular space between the collar (2) and the monopile (3) encloses the soil of the sea ground (7).

6. Monopile foundation according to any one of the claims 3 or 4, **characterized in that** the collar (2) and the central hub are connected by at least three radially extending spacers, spokes, separator blades or junction plates.

7. Subsea base (1) for establishing a monopile foundation according to any one of the preceding claims, comprising an outer collar (2) and an inner pile sleeve (4) for receiving a monopile (3), the collar (2) and the pile sleeve (4) being arranged coaxially and in projection preferably concentrically relative to each other, the collar (2) defining a hollow tube-like profile with an enlarged diameter.

8. Subsea base (1) according to claim 7, **characterized in that** the pile sleeve (4) extends at a top portion of the collar (2) and is arranged at an elevated position on the collar (2) so that the subsea base (1) is stackable.

9. Method of establishing a monopile foundation of an offshore tower structure comprising the following steps:
- providing a subsea base (1) comprising a collar (2) and an inner pile sleeve (4), the collar (2) having a large diameter than the pile sleeve (4),
- driving the subsea base (1) into the sea ground (7) so that the collar (2) is at least partially embedded into the sea ground (7),
- driving the monopile (3) through the pile sleeve (4) into the sea ground (7) and
- grouting an annular space between the pile sleeve (4) and the monopile (3).

10. Method according to claim 9, **characterized in that** the subsea base (1) and preferably also the monopile (3) is vibrated into the sea ground (7).
